# EUROPEAN PATENT APPLICATION

(11) **EP 4 783 300 A1**
(43) Date of publication of application: **29.07.2026**
(21) Application number: 25182773.9
(22) Date of filing: 13.06.2025
(51) Int. Cl.: H01M 10/613, H01M 10/647, H01M 10/6557, H01M 10/6568, H01M 50/20, H01M 50/209, H01M 50/367, H01M 10/617, H01M 10/6554, H01M 10/6555, H01M 10/6556, H01M 10/6567

(54) **BATTERY MODULE, ENERGY STORAGE SYSTEM AND ELECTRIC DEVICE**

(30) Priority: 07.05.2025 CN 202510584750
(71) Applicant: Zhejiang Jinko Energy Storage Co., Ltd., Jiaxing, Zhejiang (CN)
(72) Inventor: FU, Chuanxiang, JIAXING (CN); ZHANG, Luhua, JIAXING (CN); WANG, Shiming, JIAXING (CN); SUN, Wei, JIAXING (CN); WANG, Xiaojie, JIAXING (CN)
(74) Representative: Algemeen Octrooi- en Merkenbureau B.V.

(57) **Abstract**

The present disclosure relates to the technical field of batteries, and, in particular, to a battery module, an energy storage system and an electric device. In the present disclosure, when liquid in a flow guiding cavity contacts a bottom side of a battery cell, the liquid is forced to enter a flow guiding channel through an inlet of the flow guiding channel, to perform heat management on the battery cell. In this process, since an opening of the flow guiding cavity directly matches with the battery cell, the liquid in the flow guiding cavity directly contacts the bottom side of the battery cell, thereby increasing a contact area between the liquid and the battery cell, and improving a heat management effect. Meanwhile, since a fluid channel which forces the liquid to enter the flow guiding channel through the inlet of the flow guiding channel and flow out from the flow guiding channel is formed, the liquid better fits a side surface of a cavity wall of the flow guiding channel formed by the battery cells, thereby facilitating heat exchange between the liquid and the battery cells, and then facilitating an improvement of a heat management effect.

## Description

### TECHNICAL FIELD

The present disclosure relates to the technical field of batteries, and, in particular, to a battery module, an energy storage system and an electric device.

### BACKGROUND

Batteries are widely used in energy storage systems or electric devices, and requirements on energy density of the batteries are increasingly high, so that generated heat amounts of the batteries in an operation process are increasingly high. Therefore, a heat management effect on the battery is required to be improved.

### SUMMARY

Based on this, there is a need to provide a battery module, an energy storage system and an electric device, to improve a heat management effect on a battery.

According to an aspect of the present disclosure, embodiments of the present disclosure provide a battery module, including: a plurality of battery cells arranged at least along a first direction, a flow guiding channel being defined between two adjacent battery cells along the first direction, bottom sides of the two adjacent battery cells defining an inlet of the flow guiding channel, and top sides of the two adjacent battery cells defining an outlet of the flow guiding channel; and a wall structure including a flow guiding cavity, at least part of the flow guiding cavity being arranged on the bottom sides of the plurality of battery cells, and the flow guiding cavity including a liquid inlet and an opening facing the plurality of battery cells. The plurality of battery cells are in matched connection to the wall structure, in such a manner that the inlet of the flow guiding channel is in communication with the opening, and a fluid channel which forces a liquid flowing into the flow guiding cavity to flow into the flow guiding channel through the opening is defined.

In some embodiments, the wall structure includes a liquid inlet channel, and an outlet of the liquid inlet channel is in communication with the liquid inlet; and an inlet of the liquid inlet channel and the liquid inlet are located on two opposite sides of the plurality of battery cells.

In some embodiments, the plurality of battery cells include a first side and a second side oppositely arranged in the first direction; the inlet of the liquid inlet channel is located on the first side, and the liquid inlet is located on the second side.

In some embodiments, at least one liquid inlet channel is provided, and a plurality of flow guiding cavities are provided; all of the plurality of flow guiding cavities are arranged along a second direction; one liquid inlet channel is arranged between two adjacent flow guiding cavities along the second direction; the liquid inlets of the two adjacent flow guiding cavities are in communication with the outlet of the liquid inlet channel arranged between the two adjacent flow guiding cavities; and a direction from the bottom side of the battery cell to the top side of the battery cell, the first direction and the second direction intersect each other.

In some embodiments, the liquid inlet channel extends lengthwise in the first direction.

In some embodiments, the plurality of battery cells are arranged in at least one row along the second direction; each row of battery cells is arranged corresponding to at least one flow guiding cavity, and the inlet of the flow guiding channel defined by each row of battery cells is in communication with the opening of the corresponding flow guiding cavity; and the direction from the bottom side of the battery cell to the top side of the battery cell, the first direction and the second direction intersect each other.

In some embodiments, the opening is arranged on the bottom sides of the plurality of battery cells, and an orthographic projection of the opening onto a reference plane is located within a range of an orthographic projection of the plurality of battery cells onto the reference plane, the reference plane being a plane perpendicular to a direction from the bottom side of the battery cell to the top side of the battery cell.

In some embodiments, the wall structure includes a first body and a second body connected to each other; the first body at least includes a bottom wall, the bottom wall and the second body are arranged along the direction from the bottom side of the battery cell to the top side of the battery cell, and the flow guiding cavity is defined by the first body and the second body; and the second body includes a carrying surface facing the plurality of battery cells, and the carrying surface carries the plurality of battery cells.

In some embodiments, the plurality of battery cells include a first side and a second side oppositely arranged along the first direction; the second body includes at least three carrying portions arranged at intervals along a second direction, and the at least three carrying portions each extend from the first side to the second side; a plurality of flow guiding cavities are defined by the at least three carrying portions and the first body; side surfaces of the at least three carrying portions facing the plurality of battery cells form at least a part of the carrying surface; and the direction from the bottom side of the battery cell to the top side of the battery cell, the first direction and the second direction intersect each other.

In some embodiments, the second body further includes a first connection portion and a second connection portion oppositely arranged along the first direction; the at least three carrying portions each include a first end in the second direction connected to the first connection portion, and second end in the second direction connected to the second connection portion, to define the plurality of flow guiding cavities; and side surfaces of the first connection portion, the second connection portion and all the carrying portions facing the plurality of battery cells form the carrying surface.

In some embodiments, among the at least three carrying portions, each carrying portion other than a first carrying portion and a last carrying portion arranged in the second direction is a target portion; at least one target portion is provided therein with a liquid inlet channel, an outlet of the liquid inlet channel is in communication with a liquid inlet of a flow guiding cavity corresponding to the liquid inlet channel, and the flow guiding cavity corresponding to the liquid inlet channel is the flow guiding cavity located on each of two sides of the target portion in the second direction, the target portion being provided with the liquid inlet channel.

In some embodiments, at least one of the at least three carrying portions is configured as a bent portion and connected to the bottom wall of the first body.

In some embodiments, a plurality of second bodies are provided, and all of the plurality of the second bodies are arranged in the second direction.

In some embodiments, the second body is an integrally formed member.

In some embodiments, the battery module further includes a sealing member, and the sealing member is arranged between the carrying surface and the plurality of battery cells.

In some embodiments, the wall structure further includes an accommodation cavity, and the flow guiding cavity and the plurality of battery cells are arranged in the accommodation cavity; a buffer cavity is further defined between the wall structure and the plurality of battery cells, the buffer cavity at least surrounds the plurality of battery cells, and the buffer cavity is in communication with the outlet of the flow guiding channel; and the battery module further includes a liquid outlet member, and an interior of the liquid outlet member is in communication with the buffer cavity.

In some embodiments, the battery module further includes a liquid inlet member, an outlet of the liquid inlet member is in communication with the liquid inlet of the flow guiding cavity, and the liquid inlet member and the liquid outlet member are both arranged on the wall structure and located on a same side of the wall structure.

In some embodiments, in the direction from the bottom side of the battery cell to the top side of the battery cell, an outlet of the liquid outlet member is located downstream of an inlet of the liquid inlet member.

In some embodiments, large surfaces of every two adjacent battery cells in the first direction face each other and define the flow guiding channel.

In some embodiments, the battery module further includes a spacer; and the spacer is arranged between two adjacent battery cells along the first direction to define the flow guiding channel.

In some embodiments, the battery module further includes an end plate; the end plate is arranged on each of two sides of the plurality of battery cells in the first direction, and a heat dissipation structure is arranged on a side of each end plate away from the plurality of battery cells.

In some embodiments, the heat dissipation structure is configured as a heat dissipation fin.

In some embodiments, the heat dissipation structure is configured as a recess arranged on a side of the end plate away from the plurality of battery cells.

According to another aspect of the present disclosure, embodiments of the present disclosure provide an energy storage system, including the battery module according to any of the above embodiments.

According to still another aspect of the present disclosure, embodiments of the present disclosure provide an electric device, including the battery module according to any of the above embodiments.

For the above-described battery module, energy storage system and electric device, the battery module at least includes the battery cells and the wall structure. The flow guiding channel is defined between two adjacent battery cells along the first direction, the flow guiding cavity at least partially arranged on the bottom sides of the battery cells is arranged on the wall structure, the flow guiding cavity includes the opening in communication with the inlet of the flow guiding channel and the opening is faces the battery cells, so that the fluid channel can be formed by the matched connection of the plurality of battery cells and the wall structure. With the fluid channel, when the liquid in the flow guiding cavity contacts the bottom side of the battery cell, the liquid is forced to enter the flow guiding channel through the inlet of the flow guiding channel, so as to perform heat management on the battery cell. In this process, since the opening of the flow guiding cavity directly matches with the battery cell, the liquid in the flow guiding cavity directly contacts the bottom side of the battery cell, thereby increasing a contact area between the liquid and the battery cell, and improving a heat management effect. Meanwhile, since the fluid channel which forces the liquid to enter the flow guiding channel through the inlet of the flow guiding channel and flow out from the flow guiding channel is formed, the liquid better fits a side surface of a cavity wall of the flow guiding channel formed by the battery cells, thereby facilitating heat exchange between the liquid and the battery cells, and then facilitating an improvement of the heat management effect.

Additional aspects and advantages of embodiments of the present disclosure will be given in part in the following descriptions, become apparent in part from the following descriptions, or be learned from the practice of the embodiments of the present disclosure.

### BRIEF DESCRIPTION OF DRAWINGS

Through reading detailed descriptions of the following embodiments, those of ordinary skill in the art shall understand various advantages and benefits thereof. The accompanying drawings are merely intended to illustrate objectives of the embodiments, but are not interpreted as limitations on the present disclosure. In addition, the same reference sign is used to indicate the same member throughout the accompanying drawings. In the drawings:
FIG. 1 is a schematic perspective structural diagram of a battery module according to one or more embodiments of the present disclosure;
FIG. 2 is a schematic perspective structural diagram of a plurality of battery cells in one or more embodiments of the present disclosure;
FIG. 3 is a schematic perspective structural diagram of a plurality of battery cells in one or more embodiments of the present disclosure;
FIG. 4 is a schematic perspective structural diagram of match of two adjacent battery cells in one or more embodiments of the present disclosure;
FIG. 5 is a schematic perspective structural diagram of match of two adjacent battery cells in one or more embodiments of the present disclosure;
FIG. 6 is a schematic perspective structural diagram of a wall structure in one or more embodiments of the present disclosure;
FIG. 7 is a schematic partial sectional structural diagram of match of a battery cell and a wall structure in one or more embodiments of the present disclosure;
FIG. 8 is a schematic partial sectional structural diagram of match of a battery cell and a wall structure in one or more embodiments of the present disclosure;
FIG. 9 is a schematic diagram of the structure illustrated in FIG. 8 in an use state;
FIG. 10 is a schematic diagram of the structure illustrated in FIG. 8 in another use state;
FIG. 11 is a schematic perspective structural diagram of a wall structure in one or more embodiments of the present disclosure;
FIG. 12 is a schematic perspective structural diagram of a wall structure in one or more embodiments of the present disclosure;
FIG. 13 is a schematic perspective structural diagram of a battery module according to one or more embodiments of the present disclosure;
FIG. 14 is a schematic perspective structural diagram of a battery module according to one or more embodiments of the present disclosure;
FIG. 15 is a schematic diagram of a projection relationship of a battery cell and an opening in one or more embodiments of the present disclosure;
FIG. 16 is a schematic diagram of the projection relationship of a battery cell and an opening in one or more embodiments of the present disclosure;
FIG. 17 is a schematic partial sectional structural diagram of match of a battery cell and a wall structure in one or more embodiments of the present disclosure;
FIG. 18 is a schematic perspective structural diagram of a battery module according to one or more embodiments of the present disclosure;
FIG. 19 is a schematic sectional structural diagram of FIG. 18;
FIG. 20 is a schematic perspective structural diagram of a part of a wall structure in one or more embodiments of the present disclosure;
FIG. 21 is a schematic top structural diagram of FIG. 20;
FIG. 22 is a schematic structural diagram of match of a battery cell and a spacer in one or more embodiments of the present disclosure;
FIG. 23 is a schematic structural diagram of match of a battery cell and a spacer in one or more embodiments of the present disclosure;
FIG. 24 is a schematic perspective structural diagram of match of a battery cell and an end plate in one or more embodiments of the present disclosure;
FIG. 25 is a schematic perspective structural diagram of an end plate in one or more embodiments of the present disclosure;
FIG. 26 is a schematic structural diagram of match of a battery cell and a carrying portion in one or more embodiments of the present disclosure; and
FIG. 27 is a schematic partial enlarged structural diagram of A shown in FIG. 26.

### REFERENCE SIGNS:

- 100: Battery module;
- 110: Battery cell;
- p1: Flow guiding channel,
- s1: First side;
- s2: Second side;
- X: Pressure relief mechanism;
- 120: Wall structure;
- Q: Accommodation cavity;
- H: Buffer cavity;
- D: Flow guiding cavity;
- w1: Liquid inlet;
- w2: Opening;
- p2: Liquid inlet channel;
- 121: First body;
- 1211: Bottom wall;
- 1212: Side wall;
- 1213: Top wall;
- 122: Second body;
- 1221: Carrying portion;
- m: Carrying surface;
- 1222: First connection portion;
- 1223: Second connection portion;
- T: Target portion;
- p3: Gas exhaust channel;
- 130: Sealing member;
- 140: Liquid outlet member;
- 150: Liquid inlet member;
- 160: End plate;
- R: Heat dissipation structure;
- G: Spacer;
- U: Protrusion;
- V: Turbulence structure;
- E: Reference plane;
- y1: First projection;
- y1a: First sub-projection;
- y2: Second projection;
- y2a: Second sub-projection;
- N: Cooling liquid;
- F1: First direction;
- F2: Second direction;
- F3: Third direction.

### DESCRIPTION OF EMBODIMENTS

In order to make the aforementioned objects, features and advantages of the present disclosure more easily understandable, embodiments of the present disclosure are described below in detail with reference to the accompanying drawings. In the following description, numerous specific details are set forth, so as to provide a thorough understanding of the present disclosure. However, the present disclosure may be implemented in many ways different from those described herein, those skilled in the art may make similar improvements without departing from the essence of the present disclosure, and therefore, the present disclosure is not limited to the embodiments disclosed below.

In the description of the present disclosure, it should be understood that the orientation or position relationship indicated by the terms "central", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential", etc. are based on the orientation or position relationship shown in the accompanying drawings and are only intended to facilitate the description of the present disclosure and simplify the description, rather than indicating or implying that the apparatus or element referred to must have a particular orientation or be constructed and operated in a particular orientation, and therefore are not to be interpreted as limitations on the present disclosure.

In addition, terms "first" and "second" are used herein for purposes of description and shall not be construed as indicating or implying a relative importance, or implicitly specifying the number of the indicated technical features. Thus, the feature defined with "first" and "second" may include at least one of this feature explicitly or implicitly. In the description of the present disclosure, "a plurality of" means at least two, such as two, three, or the like, unless specifically stated otherwise.

In the present disclosure, unless specifically stated and limited, the terms "mounting", "coupling", "connecting" and "fixing" should be understood in a broad sense. For example, it can be a fixed connection, a detachable connection, or an integral structure; and/or it can be a mechanical connection or an electrical connection; and/or it can be a direct connection, an indirect connection through an intermediate medium; and/or it can an internal communication between two elements, or an interaction between two elements, unless specifically limited. For those of ordinary skill in the art, the specific meanings of the above terms in the present disclosure can be understood on case-by-case.

In the present disclosure, unless specifically stated and limited, the description that a first feature is "on/above" or "below" a second feature may mean that the first feature is in direct contact with the second feature, or the first feature and the second feature are in indirect contact via an intermediate medium. Furthermore, a first feature "on," "above," or "on top of" a second feature may include an embodiment in which the first feature is right or obliquely "on," "above," or "on top of" the second feature, or just means that the first feature is at a height higher than that of the second feature. A first feature "below," "under," or "on bottom of" a second feature may include an embodiment in which the first feature is right or obliquely "below," "under," or "on bottom of" the second feature, or just means that the first feature is at a height lower than that of the second feature.

It should be noted that when an element is referred to as being "fixed on" or "provided at" another element, the element may be directly located on the other element or an intermediate element may exist. If one element is considered to be "connected" to another element, it may be directly connected to the another element or an intermediate element may exist. As used herein, the terms "vertical", "horizontal", "upper", "lower", "left", "right", or the like, are for purposes of illustration only and do not denote a sole embodiment.

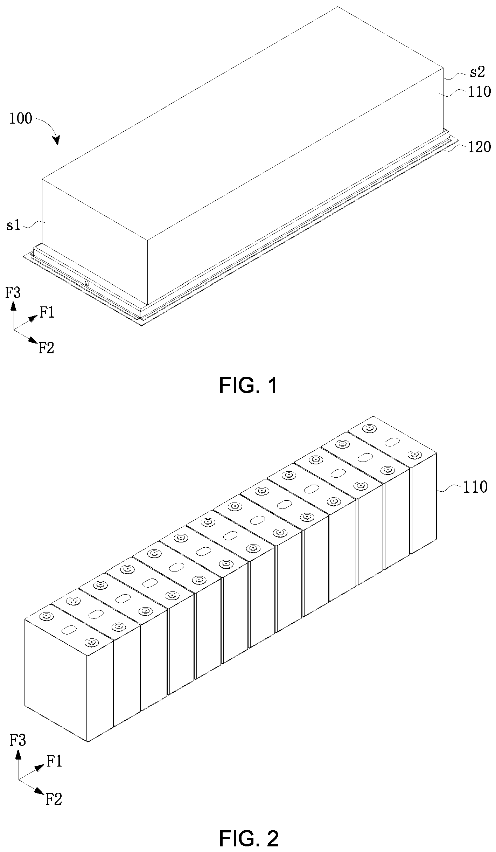

According to some embodiments of the present disclosure, referring to FIG. 1 which is a schematic perspective structural diagram of a battery module 100 according to one or more embodiments of the present disclosure, the embodiments of the present disclosure provide a battery module 100 including a plurality of battery cells 110 and a wall structure 120. FIG. 1 schematically illustrates the plurality of battery cells 110, and the plurality of battery cells 110 are not distinguished.

The battery cell 110 refers to a smallest unit constituting the battery module 100. In the embodiments of the present disclosure, the battery cell 110 may include a lithium ion battery, a sodium ion battery, a magnesium ion battery module 100, or the like, which is not limited in the embodiments of the present disclosure. The battery cell 110 includes a shell, an electrode assembly, and other functional components. The shell is a component for forming an internal environment of the battery cell 110. The formed internal environment may be used to accommodate the electrode assembly, an electrolyte, and other components. Functional components, such as an electrode terminal and a pressure relief mechanism, may be arranged on the shell. The electrode terminal may be configured to be electrically connected to the electrode assembly to output or input electric energy of the battery cell 110. The pressure relief mechanism is configured to relieve an internal pressure when the internal pressure or temperature of the battery cell 110 reaches a threshold, so as to improve a safety performance of the battery cell 110. A threshold design varies according to design requirements. The shell may further be provided with a liquid injection hole for injecting the electrolyte into the battery cell 110. The electrode assembly is a component in the battery cell 110 in which an electrochemical reaction occurs. One or more electrode assemblies may be contained within the shell. The electrode assembly is mainly formed by stacking or winding a positive plate and a negative plate, and a spacer G is generally arranged between the positive plate and the negative plate. Parts of the positive plate and the negative plate having active materials constitute a body portion of the electrode assembly, and parts of the positive plate and the negative plate having no active materials constitute tabs. The positive tab and the negative tab may be located at a same end of the body portion or at two ends of the body portion, respectively, and may be located at a top of the body portion or at a side wall 1212 of the body portion, there is no limitation herein. In charging and discharging processes of the battery module 100, the positive and negative active materials react with the electrolyte, and the tabs are connected to the electrode terminals to form a current loop. The spacer G is configured to separate the positive plate from the negative plate, and prevent free passing of electrons in the battery cell 110, so that ions in the electrolyte can freely flow between the positive plate and the negative plate. The spacer G may be a film member made of polyethylene (PE), polypropylene (PP), or the like.

The plurality of battery cells 110 are arranged at least in a first direction F1. A flow guiding channel p1 is defined between every two battery cells 110 adjacent along the first direction F1, bottom sides of the two battery cells 110 define an inlet of the flow guiding channel p1, and top sides of the two battery cells 110 define an outlet of the flow guiding channel p1.

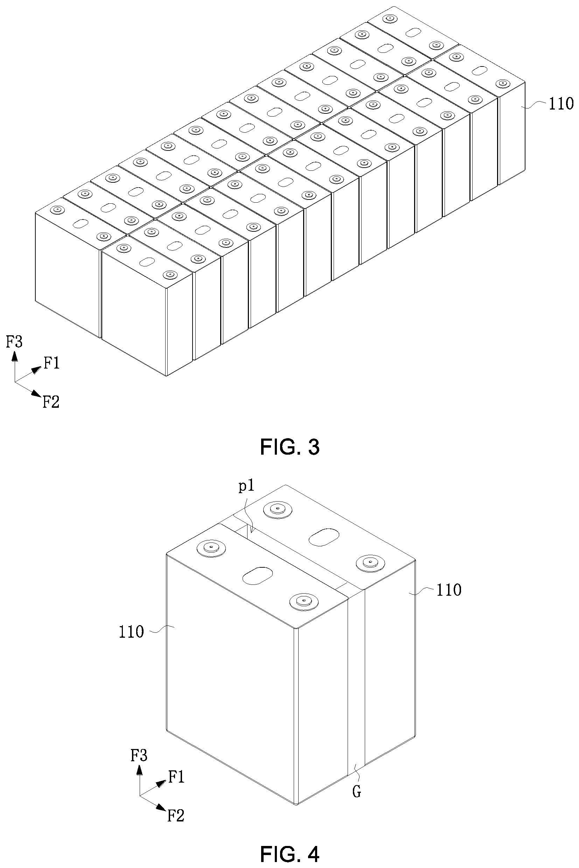

The arrangement of the multiple battery cells 110 may be as shown in FIG. 2, which is a schematic perspective structural diagram of the plurality of battery cells 110 in one or more embodiments of the present disclosure, and all the battery cells 110 are arranged along the first direction F1. The arrangement may also be as shown in FIG. 3, which is a schematic perspective structural diagram of a plurality of battery cells 110 in one or more embodiments of the present disclosure, and all the battery cells 110 are arranged along a first direction F1 and a second direction F2. There is no limitation herein. The first direction F1 and the second direction F2 intersect with each other.

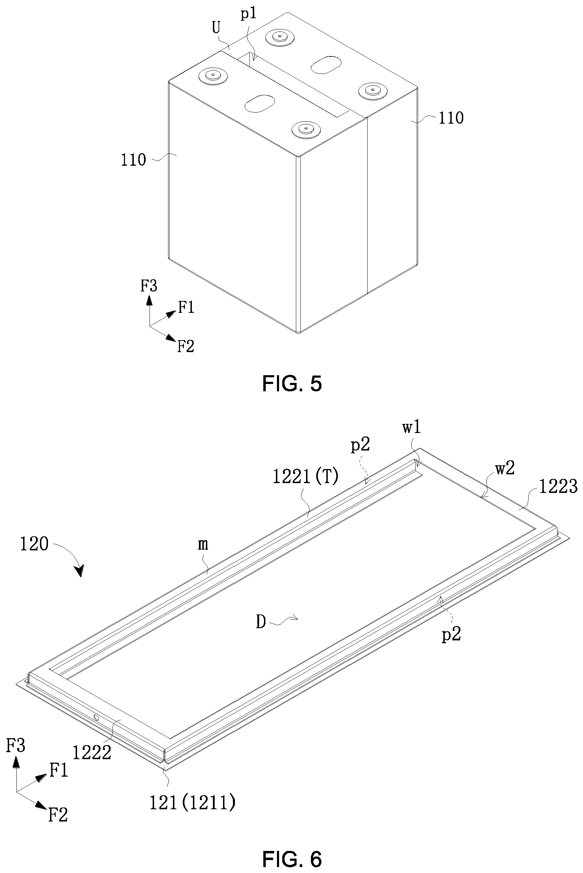

The flow guiding channel p1 is a channel configured to guide flowing of liquid and including an inlet and an outlet. The flow guiding channel p1 may be defined by two battery cells 110 adjacent along the first direction F1, or may be defined by two battery cells 110 adjacent along the first direction F1 by means of related components. There is no limitation herein. For example, taking FIG. 4 as an example which is a schematic perspective structural diagram of match of the two adjacent battery cells 110 in one or more embodiments of the present disclosure, two spacers G are arranged between the two battery cells 110 adjacent along the first direction F1, and f the two spacers G and facing sides of the two battery cells 110 jointly define the flow guiding channel p1. For another example, taking FIG. 5 as an example which is a schematic perspective structural diagram of match of the two adjacent battery cells 110 in one or more embodiments of the present disclosure, protrusions U are arranged on facing sides of the two battery cells 110 adjacent along the first direction F1, and the facing sides of the two battery cells 110 adjacent along the first direction F1 and the two protrusions U jointly define the flow guiding channel p1. The protrusion U and the shell of the corresponding battery cell 110 may be integrally formed.

The battery cell 110 includes a bottom side and a top side oppositely arranged along a third direction F3. That is, a direction from the bottom side of the battery cell 110 to the top side of the battery cell 110 is parallel to the third direction F3. The first direction F1, the second direction F2 and the third direction F3 intersect each other. In the embodiments of the present disclosure, taking FIG. 1 to FIG. 5 as an example, the situation that the first direction F1, the second direction F2 and the third direction F3 are perpendicular to each other is illustrated. Since the bottom sides of the two battery cells 110 adjacent in the first direction F1 define the inlet of the flow guiding channel p1, and the top sides of the two battery cells 110 adjacent in the first direction F1 define the outlet of the flow guiding channel p1, the inlet of the flow guiding channel p1 and the outlet of the flow guiding channel p1 are oppositely arranged in the third direction F3.

The wall structure 120 includes a flow guiding cavity D, and at least a part of the flow guiding cavity D is arranged on the bottom sides of the plurality of battery cells 110. The flow guiding cavity D includes a liquid inlet w1 and an opening w2 arranged towards the plurality of battery cells 110. The plurality of battery cells 110 are in matched connection to the wall structure 120, in such a manner that the inlet of the flow guiding channel p1 is in communication with the opening w2, and a fluid channel capable of forcing liquid flowing into the flow guiding cavity D to flow into the flow guiding channel p1 through the opening w2 is defined.

The wall structure 120 is a structure that may have functions of partitioning, supporting, or the like. The flow guiding cavity D is a structure for guiding the flowing of the liquid to enable the liquid to be input from the liquid inlet w1 of the flow guiding cavity D and be output from the opening w2 of the flow guiding cavity D. The opening w2 of the flow guiding cavity D is in a state of being not covered or closed by the wall structure 120. The matched connection between the plurality of battery cells 110 and the wall structure 120 means that the plurality of battery cells 110 may be directly connected to the wall structure 120 or connected to the wall structure 120 by means of related components, as long as the plurality of battery cells 110 and the wall structure 120 can be in matched connection.

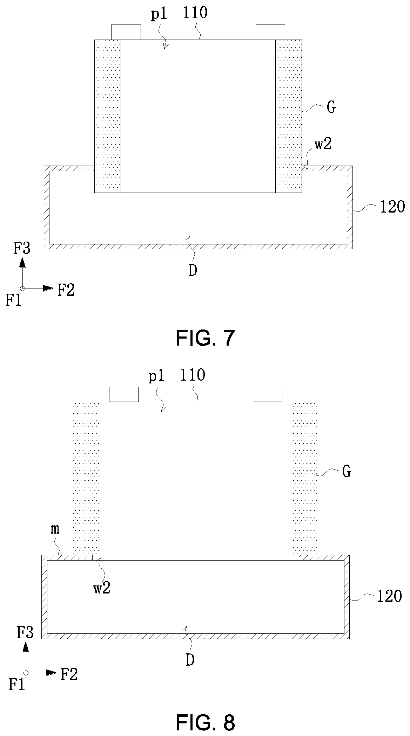

For example, taking FIG. 6 as an example which is a schematic perspective structural diagram of the wall structure 120 in one or more embodiments of the present disclosure, the wall structure 120 mainly functions to define the flow guiding cavity D including the liquid inlet w1 and the opening w2. Certainly, the wall structure 120 may also be configured to have a structure that can accommodate the plurality of battery cells 110, there is no limitation herein. Continuously taking FIG. 6 as an example, with combined reference to FIG. 7 and FIG. 8 in which FIG. 7 is a schematic partial sectional structural diagram of match of a battery cell 110 and a wall structure 120 in one or more embodiments of the present disclosure, and FIG. 8 is a schematic partial sectional structural diagram of match of a battery cell 110 and a wall structure 120 in one or more embodiments of the present disclosure, when the plurality of battery cells 110 and the wall structure 120 are in matched connection, at least the structures illustrated in FIG. 7 and FIG. 8 can be formed. In the case illustrated in FIG. 7, the plurality of battery cells 110 may be held at the opening w2, and in the case illustrated in FIG. 8, the plurality of battery cells 110 may be carried on the wall structure 120, there is no limitation herein.

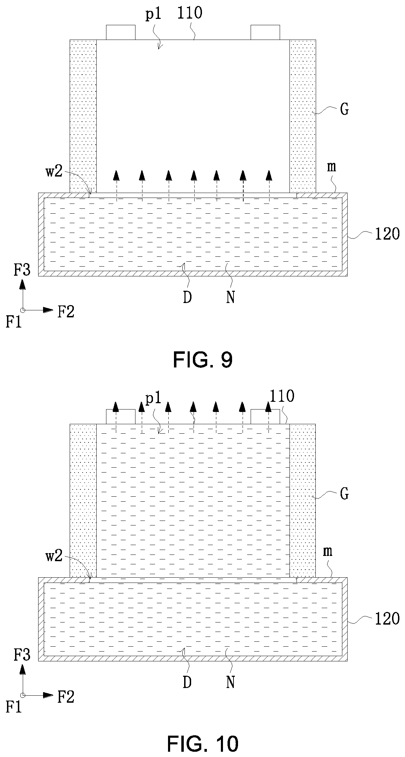

Continuously taking FIG. 8 as an example, with combined reference to FIG. 9 and FIG. 10 in which FIG. 9 is a schematic diagram of the structure illustrated in FIG. 8 in an use state, and FIG. 10 is a schematic diagram of the structure illustrated in FIG. 8 in another use state, since the plurality of battery cells 110 and the wall structure 120 are in matched connection to define the aforementioned fluid channel, the cooling liquid N entering the flow guiding cavity D through the liquid inlet w1 of the flow guiding cavity D can enter the flow guiding channel p1 through the opening w2 of the flow guiding cavity D, that is, the cooling liquid N flows in from the bottom sides of the plurality of battery cells 110, and flows out from the top sides of the plurality of battery cells 110. In FIG. 9 and FIG. 10, the flowing direction of the cooling liquid N is roughly illustrated by the arrows.

Thus, the flow guiding channel p1 is defined between every two battery cells 110 adjacent along the first direction F1, and the flow guiding cavity D at least partially arranged on the bottom sides of the battery cells 110 is arranged in the wall structure 120, in this case, the flow guiding cavity D includes the opening w2 in communication with the inlet of the flow guiding channel p1 and the opening w2 is arranged towards the battery cells 110, so that the fluid channel can be formed by the matched connection of the plurality of battery cells 110 and the wall structure 120. With the fluid channel, when the liquid in the flow guiding cavity D contacts the bottom side of the battery cell 110, the liquid can be forced to enter the flow guiding channel p1 through the inlet of the flow guiding channel p1, so as to perform heat management on the battery cell 110. In this process, since the opening w2 of the flow guiding cavity D directly matches with the battery cell 110, the liquid in the flow guiding cavity D can directly contact the bottom side of the battery cell 110, thereby increasing a contact area between the liquid and the battery cell 110, thus improving a heat management effect. Meanwhile, since the fluid channel which forces the liquid to enter the flow guiding channel p1 through the inlet of the flow guiding channel p1 and flow out from the flow guiding channel p1 is formed, the liquid can better fit a side surface of a cavity wall of the flow guiding channel p1 formed by the battery cells 110, thereby facilitating heat exchange between the liquid and the battery cells 110, and then facilitating an improvement of the heat management effect.

According to some embodiments of the present disclosure, with continued reference to FIG. 6, the wall structure 120 is further provided with a liquid inlet channel p2, and an outlet of the liquid inlet channel p2 is in communication with the liquid inlet w1. The inlet of the liquid inlet channel p2 and the liquid inlet w1 are located on two opposite sides of the plurality of battery cells 110. From the perspective illustrated in FIG. 6, the position of the liquid inlet channel p2 is illustrated by dotted lines, and it can be understood that the liquid inlet channel p2 is a channel arranged in the wall structure 120.

Thus, the liquid can be further buffered through the liquid inlet channel p2 before entering the liquid inlet w1, thereby facilitating the liquid to flow into the flow guiding cavity D from the liquid inlet w1 in a more stable state. In this way, it facilitates an improvement of stability of the fluid channel, and then facilitates the liquid to better fit the side surface of the cavity wall of the flow guiding channel p1 formed by the battery cells 110, thereby further improving an effect of the heat exchange between the liquid and the battery cells 110.

Certainly, in some other embodiments, the inlet of the liquid inlet channel p2 and the liquid inlet w1 may be located on two adjacent sides or a same side of the plurality of battery cells 110, there is no limitation herein.

According to some embodiments of the present disclosure, with continued reference to FIG. 1, and with combined reference to FIG. 6, the plurality of battery cells 110 include a first side s1 and a second side s2 oppositely arranged along the first direction F1. The inlet of the liquid inlet channel p2 is located on the first side s1, and the liquid inlet w1 is located on the second side s2.

It should be noted that "the inlet of the liquid inlet channel p2 being located on the first side s1" and "the liquid inlet w1 is located on the second side s2" refers to orientations of the inlet of the liquid inlet channel p2 and the liquid inlet w1 relative to the plurality of battery cells 110, and do not indicate that the inlet of the liquid inlet channel p2 and the liquid inlet w1 are disposed on the plurality of battery cells 110. Related parts of the first side s1 and the second side s2 mentioned later can be understood by referring to the above content, and are not repeated.

Since the plurality of battery cells 110 are arranged at least along the first direction F1, a space of the liquid inlet channel p2 can be better utilized due to such an arrangement of the inlet of the liquid inlet channel p2 and the liquid inlet w1 of the flow guiding cavity D, which helps to stabilize a liquid pressure in the fluid channel, so as to further reduce an influence of pressure fluctuations on the flowing of the liquid.

Certainly, in some other embodiments, with combined reference to FIG. 1, the inlet of the liquid inlet channel p2 and the liquid inlet w1 of the flow guiding cavity D may be located on two opposite sides of the plurality of battery cells 110 along the second direction F2, there is no limitation herein.

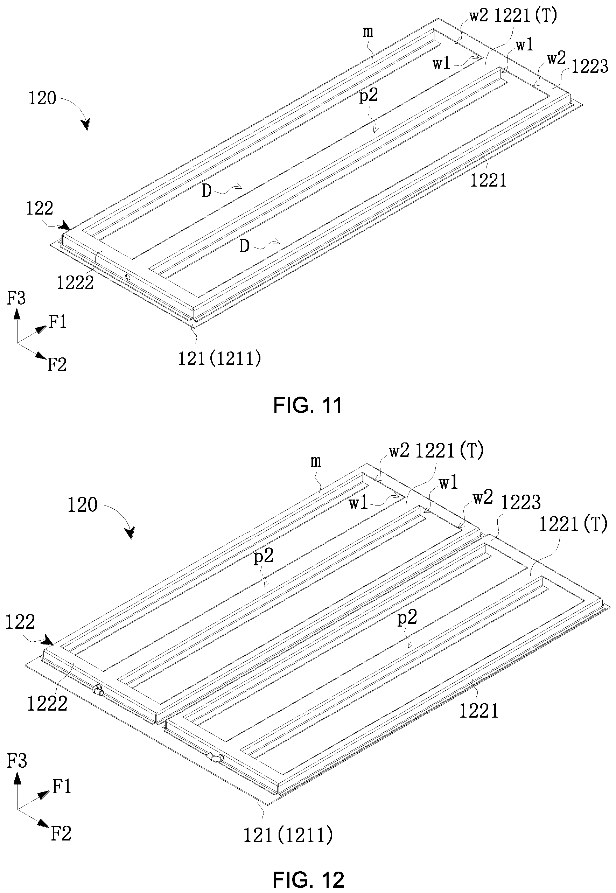

According to some embodiments of the present disclosure, referring to FIG. 11 which is a schematic perspective structural diagram of a wall structure 120 in one or more embodiments of the present disclosure, at least one liquid inlet channel p2 is provided. A plurality of flow guiding cavities D are provided. All the flow guiding cavities D are arranged along the second direction F2. One liquid inlet channel p2 is arranged between at least two adjacent flow guiding cavities D along the second direction F2; and the liquid inlets w1 of the two adjacent flow guiding cavities D are in communication with the outlet of the liquid inlet channel p2 arranged between the two adjacent flow guiding cavities D. The direction from the bottom side of the battery cell 110 to the top side of the battery cell 110, the first direction F1, and the second direction F2 intersect each other. In the embodiments of the present disclosure, taking FIG. 11 as an example, the direction from the bottom side of the battery cell 110 to the top side of the battery cell 110 and the third direction F3 are parallel to each other.

One, two or another number of liquid inlet channels p2 may be provided, and two, three, four, five or another number of flow guiding cavities D may be provided, there is no limitation herein. One liquid inlet channel p2 may be arranged between every two adjacent flow guiding cavities D along the second direction F2, or one liquid inlet channel p2 may be arranged between every two of some of the adjacent flow guiding cavities D along the second direction F2, there is no limitation herein.

For example, taking FIG. 11 as an example, one liquid inlet channel p2 is provided, two flow guiding cavities D are provided, and in the second direction F2, the liquid inlet channel p2 is located between the two flow guiding cavities D. Taking FIG. 12 as an example which is a schematic perspective structural diagram of a wall structure 120 in one or more embodiments of the present disclosure, two liquid inlet channels p2 are provided, four flow guiding cavities D are provided, and along the second direction F2, one liquid inlet channel p2 is arranged between the first two adjacent flow guiding cavities D and another one liquid inlet channel p2 is arranged between the last two adjacent flow guiding cavities D, and no liquid inlet channel p2 is provided between the middle two adjacent flow guiding cavities D.

In this way, not only liquid supply to the plurality of flow guiding cavities D can be realized in a limited space, but also the plurality of battery cells 110 in different arrangements can be more flexibly configured according to the plurality of flow guiding cavities D.

Certainly, in some other embodiments, with continued reference to FIG. 6, two liquid inlet channels p2 may be provided, and one flow guiding cavity D may be provided, there is no limitation herein.

According to some embodiments of the present disclosure, with continued reference to FIG. 12, along the second direction F2, every two adjacent flow guiding cavities D form a flow guiding cavity group. A plurality of flow guiding cavity groups are provided, and the flow guiding cavities D in all the flow guiding cavity groups are different from each other. In a same flow guiding cavity group, one liquid inlet channel p2 is arranged between two adjacent flow guiding cavities D, and the liquid inlets w1 of the two adjacent flow guiding cavities D are in communication with the outlet of the liquid inlet channel p2 arranged between the two adjacent flow guiding cavities D.

Since the liquid inlet channel p2 is located between the two corresponding flow guiding cavities D, the liquid can be more uniformly distributed into the flow guiding cavities D on both sides. In this way, when the liquid flows in the liquid inlet channel p2, since an resistance in the flow guiding cavities D on the two sides of the liquid inlet channel p2 is balanced relatively, flow volumes of the liquid entering the two flow guiding cavities D tend to be the same, so that the liquid entering the flow guiding channels p1 corresponding to the two flow guiding cavities D is more balanced and stable, thereby further facilitating the liquid to contact the side surface of the cavity wall of the flow guiding channel p1 formed by the battery cells 110 to cool the battery cells 110, so as to further improve the heat management effect.

According to some embodiments of the present disclosure, with continued reference to FIG. 6, FIG. 11 and FIG. 12, the liquid inlet channel p2 is arranged to extend lengthwise along the first direction F1, and a direction from the inlet of the liquid inlet channel p2 to the liquid inlet w1 and the first direction F1 are parallel to each other.

In this way, not only liquid resistance can be reduced, but also designing and mounting of the liquid inlet channel p2 can be simpler and more direct, design difficulty and space occupation caused by a complex channel layout are reduced, and a compact design of the battery module 100 is facilitated.

Certainly, in some other embodiments, the liquid inlet channel p2 may extend in a curved manner, and the direction from the inlet of the liquid inlet channel p2 to the liquid inlet w1 and the first direction F1 are parallel to each other. Thus, the liquid inlet channel p2 can be longer to further buffer the pressure fluctuation of the liquid. No limitation is made herein.

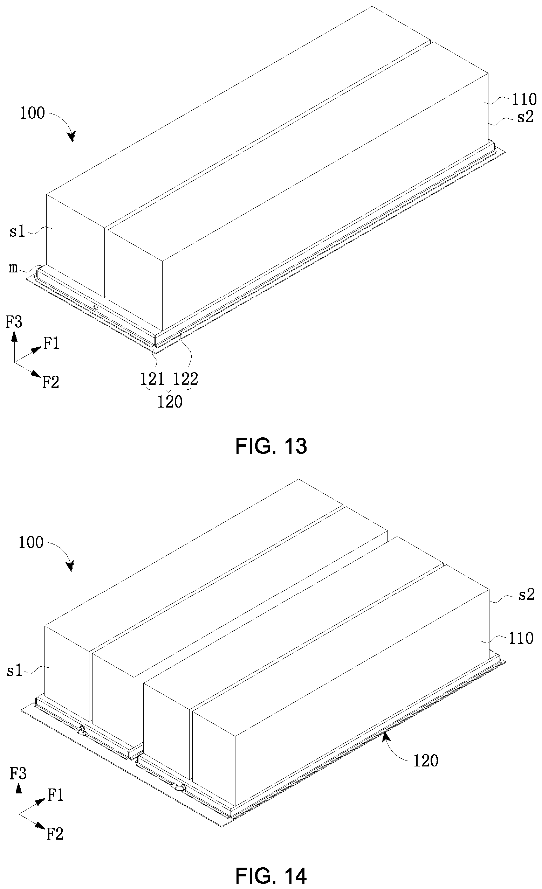

According to some embodiments of the present disclosure, with continued reference to FIG. 1, and with combined reference to FIG. 13 and FIG. 14 in which FIG. 13 is a schematic perspective structural diagram of a battery module 100 according to one or more embodiments of the present disclosure, and FIG. 14 is a schematic perspective structural diagram of a battery module 100 according to one or more embodiments of the present disclosure, the plurality of battery cells 110 are arranged in at least one row along the second direction F2. Each row of battery cells 110 is arranged corresponding to at least one flow guiding cavity D. The inlet of the flow guiding channel p1 defined by each row of battery cells 110 is in communication with the opening w2 of the corresponding flow guiding cavity D. The direction from the bottom side of the battery cell 110 to the top side of the battery cell 110, the first direction F1, and the second direction F2 intersect each other. In FIG. 13 and FIG. 14, a plurality of rows of battery cells 110 are schematically illustrated, and the battery cells 110 in each row are not shown in a distinguished manner.

The inlet of the flow guiding channel p1 is defined between every two adjacent battery cells 110 in each row of battery cells 110, and the inlet of the flow guiding channel p1 defined by each row of battery cells 110 is formed by all the inlets of the flow guiding channels p1 defined between these adjacent battery cells 110.

For example, FIG. 1 and FIG. 6 illustrate a case where one row of battery cells 110 is arranged corresponding to one flow guiding cavity D, FIG. 11 and FIG. 13 illustrate a case where two rows of battery cells 110 are arranged in one-to-one correspondence to two flow guiding cavities D, and FIG. 12 and FIG. 14 illustrate a case where four rows of battery cells 110 are arranged in one-to-one correspondence to four flow guiding cavities D. Certainly, each row of battery cells 110 may be arranged corresponding to two flow guiding cavities D, three flow guiding cavities D, or another number of flow guiding cavities D, there is no limitation herein.

Since each row of battery cells 110 is arranged corresponding to at least one flow guiding cavity D, each row of battery cells 110 can be more effectively cooled. Meanwhile, the row arrangement of the battery cells 110 is also beneficial to flexibly adjusting a position and shape of the flow guiding cavity D, so as to realize efficient utilization of the space.

Certainly, in some other embodiments, a plurality of rows of battery cells 110 may be arranged corresponding to one flow guiding cavity D, there is no limitation herein.

According to some embodiments of the present disclosure, with continued reference to FIG. 11 to FIG. 14, the battery cells 110 are arranged in a plurality of rows, and a plurality of flow guiding cavities D are provided, and all the rows of battery cells 110 and all the flow guiding cavities D are arranged in one-to-one correspondence.

Since all the rows of battery cells 110 and all the flow guiding cavities D are arranged in one-to-one correspondence, the fluid channel is defined for each row of battery cells 110 and the wall structure 120, and the fluid channels are independent from each other, so that a temperature imbalance caused by a difference of cooling effects of different rows of battery cells 110 can be effectively reduced, thereby improving consistency of the whole battery module 100, and facilitating an improvement of a whole service life, a charging and discharging efficiency and safety of the battery.

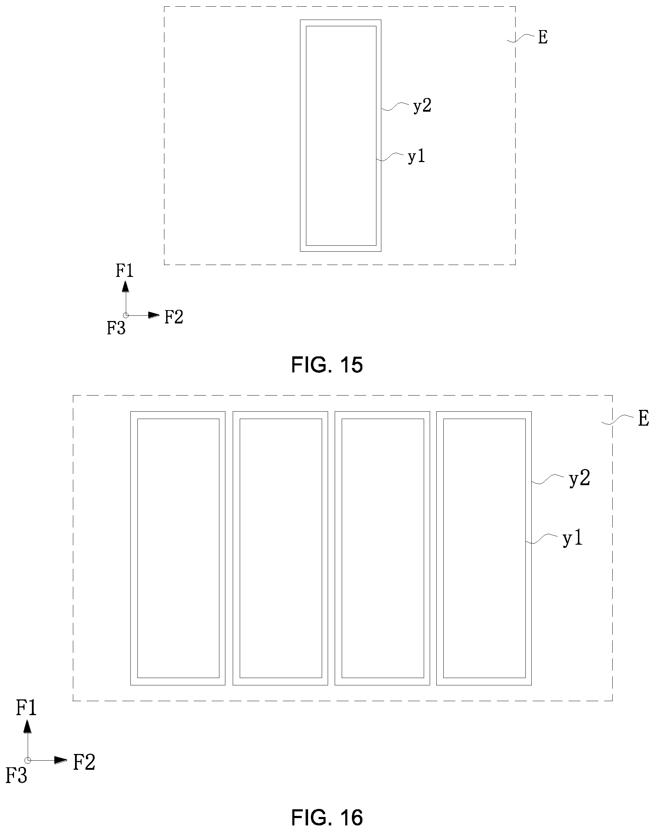

According to some embodiments of the present disclosure, with continued reference to FIG. 8 to FIG. 10, and with combined reference to FIG. 15, the opening w2 is arranged on the bottom sides of the plurality of battery cells 110, and an orthographic projection of the opening w2 onto a reference plane E is located within a range of an orthographic projection of the plurality of battery cells 110 onto the reference plane E. The reference plane E is a plane perpendicular to the direction from the bottom side of the battery cell 110 to the top side of the battery cell 110.

For example, taking FIG. 15 as an example, when the battery cells 110 are arranged in one row and one opening w2 is provided, the orthographic projection of the opening w2 onto the reference plane E is a first projection y1, the orthographic projection of the plurality of battery cells 110 onto the reference plane E is the second projection y2, and the first projection y1 is located within the second projections y2. Taking FIG. 14 as an example, with combined reference to FIG. 16 which is a schematic diagram of a projection relationship of a battery cell 110 and an opening w2 in one or more embodiments of the present disclosure, when the battery cells 110 are arranged in a plurality of rows and a plurality of flow guiding cavities D are provided, all the rows of battery cells 110 and all the flow guiding cavities D are arranged in one-to-one correspondence, that is, all the rows of battery cells 110 and all the openings w2 are arranged in one-to-one correspondence, and the first projection y1 is located within the second projection y2.

In this way, it is not only favorable for lowering a gravity center of the whole apparatus to help to improve stability of the battery module 100 in use, but also favorable for protecting the opening w2 to improve reliability of heat dissipation of the battery cell 110 by the flow guiding cavity D.

According to some embodiments of the present disclosure, with continued reference to FIG. 6, FIG. 11 and FIG. 12, the wall structure 120 includes a first body 121 and a second body 122 connected to each other. The first body 121 at least includes a bottom wall 1211, the bottom wall 1211 and the second body 122 are arranged along the direction from the bottom side of the battery cell 110 to the top side of the battery cell 110, and the flow guiding cavity D is defined by the first body 121 and the second body 122. The second body 122 includes a carrying surface m facing the plurality of battery cells 110, and the carrying surface m that carries the plurality of battery cells 110.

In this way, the wall structure 120 is utilized to carry the battery cell 110, which not only facilitates mounting and maintenance, but also provides support for the battery cell 110, thereby improving stability of the battery cell 110.

Certainly, in some other embodiments, with combined reference to FIG. 7, the wall structure 120 may not carry the battery cell 110, and the battery cell 110 may be held or fixed by means of related components, there is no limitation herein.

According to some embodiments of the present disclosure, with continued reference to FIG. 11 to FIG. 14, a plurality of battery cells 110 include a first side s1 and a second side s2 oppositely arranged along the first direction F1. The second body 122 includes at least three carrying portions 1221 arranged at intervals along the second direction F2, and the carrying portions 1221 each extend from the first side s1 to the second side s2. All the carrying portions 1221 and the first body 121 define a plurality of flow guiding cavities D. Side surfaces of all the carrying portions 1221 facing the plurality of battery cells 110 constitute at least a part of the carrying surface m. The direction from the bottom side of the battery cell 110 to the top side of the battery cell 110, the first direction F1, and the second direction F2 intersect each other.

In this way, the carrying portion 1221 can be used to carry the battery cell 110, and the carrying portion 1221 can be used to form the required flow guiding cavity D, so that the overall structure can be more compact while facilitating mounting.

According to some embodiments of the present disclosure, with continued reference to FIG. 6, FIG. 11 and FIG. 12, the second body 122 further includes a first connection portion 1222 and a second connection portion 1223 oppositely arranged along the first direction F1. One ends of all the carrying portions 1221 in the second direction F2 are connected to the first connection portion 1222, and the other one ends of all the carrying portions 1221 in the second direction F2 are connected to the second connection portion 1223, so as to define a plurality of flow guiding cavities D. Side surfaces of the first connection portion 1222, the second connection portion 1223, and all the carrying portions 1221 facing the plurality of battery cells 110 form the carrying surface m.

Thus, the second body 122 substantially forms a frame structure, which not only can define the flow guiding cavity D together with the first body 121 at least including the bottom wall 1211 and be configured to carry the battery cell 110, but also can simplify a manufacturing process.

Certainly, in some other embodiments, related structures may be arranged at positions of the first body 121 corresponding to two ends of the carrying portion 1221 along the second direction F2, so as to define the flow guiding cavity D together with the carrying portion 1221. The related structure may be integrally formed with the first body 121, or may be a structure arranged on the first body 121, there is no limitation herein.

According to some embodiments of the present disclosure, with continued reference to FIG. 11 and FIG. 12, among all the carrying portions 1221, the carrying portions 1221 other than a first carrying portion 1221 and a last carrying portion 1221 arranged along the second direction F2 are target portions T. At least one target portion T is provided therein with the liquid inlet channel p2, and the outlet of the liquid inlet channel p2 is in communication with the liquid inlet w1 of the corresponding flow guiding cavity D. The flow guiding cavities D corresponding to the liquid inlet channel p2 are flow guiding cavities D on two sides of the target portion T provided with the liquid inlet channel p2 in the second direction F2.

In some embodiments, understanding may be performed with combined reference to the relationship between the liquid inlet channel p2 and the flow guiding cavity D illustrated in some foregoing embodiments, and details are not repeated. The outlet of the liquid inlet channel p2 may be arranged at one end of the corresponding carrying portion 1221 along the first direction F1, or may be arranged at another position of the corresponding carrying portion 1221, there is no limitation herein. When the outlet of the liquid inlet channel p2 is arranged at one end of the corresponding carrying portion 1221 along the first direction F1, the liquid inlet w1 of the flow guiding cavity D may be arranged at one end of the flow guiding cavity D along the first direction F1, and the outlet of the liquid inlet channel p2 is in communication with the liquid inlet w1 of the flow guiding cavity D.

For example, taking FIG. 11 as an example, a case where the carrying portion 1221 located in the middle along the second direction F2 is the target portion T is illustrated. Taking FIG. 12 as an example, a case where the carrying portion 1221 adjacent to the first carrying portion 1221 and the carrying portion 1221 adjacent to the last carrying portion 1221 are both the target portions T is illustrated. With combined reference to FIG. 13 and FIG. 14, one target portion T may correspondingly carry a part of two rows of battery cells 110.

In this way, by providing the liquid inlet channel p2 in the carrying portion 1221 that is the target portion T, not only the battery cell 110 can be carried by the carrying portion 1221, but also a portion of the battery cell 110 in contact with the carrying portion 1221 can be cooled, and a space utilization rate can be further improved to obtain a more compact structure.

It should be noted that the relationship between the liquid inlet channel p2 and the flow guiding cavity D illustrated in some foregoing embodiments can be understood by referring to the matched connection relationship between the wall structure 120 and the plurality of battery cells 110. In addition to the carrying portion 1221 illustrated above, for example, the relationship between the liquid inlet channel p2 and the flow guiding cavity D illustrated in some foregoing embodiments may be understood with combined reference to the situation illustrated in FIG. 7, which is not repeated herein.

According to some embodiments of the present disclosure, with continued reference to FIG. 6, FIG. 11, and FIG. 12, at least one carrying portion 1221 is configured as a bent portion and connected to the bottom wall 1211 of the first body 121.

Since the bent portion has certain rigidity and bending resistance, structural stability of the carrying portion 1221 configured as the bent portion may be improved, and then, reliability of carrying the battery cell 110 may be improved. Meanwhile, the corresponding carrying portion 1221 is configured as the bent portion, which also facilitates manufacturing and mounting. When the carrying portion 1221 is configured as the bent portion and the carrying portion 1221 is the target portion T, the liquid inlet channel p2 can be formed by a space defined by the bent portion and the bottom wall 1211 of the first body 121, and by controlling a shape and a bending angle of the bent portion, the liquid can be better guided to flow in the liquid inlet channel p2.

According to some embodiments of the present disclosure, with continued reference to FIG. 6, FIG. 11 and FIG. 12, the carrying portion 1221 configured as the bent portion is connected to the bottom wall 1211 of the first body 121 by a flanging, and the flanging and the carrying portion 1221 are integrally formed.

The flanging may be manufactured simultaneously in the process of configuring the carrying portion 1221 as the bent portion, so that the carrying portion 1221 and the first body 121 can be connected through the flanging, which can further facilitate mounting and facilitate formation of the liquid inlet channel p2 when the carrying portion 1221 is the target portion T. The first body 121 and the flanging may be connected by welding, or may be connected by a sealing member 130 and a fastener, there is no limitation herein.

According to some embodiments of the present disclosure, with continued reference to FIG. 12, a plurality of second bodies 122 are provided, and all the second bodies 122 are arranged along the second direction F2.

When a plurality of second bodies 122 are provided and the battery cells 110 are arranged in a plurality of rows along the second direction F2, the second bodies 122 and the plurality of rows of battery cells 110 may be arranged in one-to-one correspondence; or as shown in FIG. 12 and FIG. 14, each second body 122 corresponds to two rows of battery cells 110, and the battery cells 110 corresponding to all the second bodies 122 are different from each other. Thus, the second body 122 may be correspondingly arranged according to the arrangement of the battery cells 110 and the corresponding relationship between the battery cells 110 and the flow guiding cavity D, there is no limitation herein. Every two second bodies 122 adjacent along the second direction F2 may be spaced apart or may adjacent to each other. The spaced arrangement facilitates mounting of a plurality of rows of battery cells 110. The adjacent arrangement facilitates a more compact overall structure.

Thus, the second body 122 may be flexibly arranged according to a corresponding usage space, there is no limitation herein.

According to some embodiments of the present disclosure, with continued reference to FIG. 6, FIG. 11 and FIG. 12, the second body 122 is an integrally formed member.

Thus, the second body 122 is convenient to manufacture while having certain structural strength.

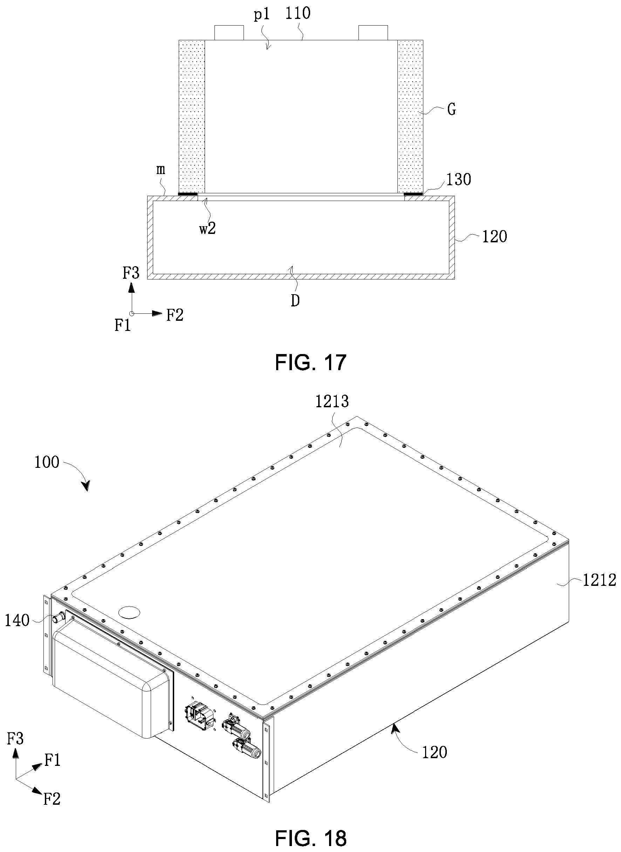

According to some embodiments of the present disclosure, referring to FIG. 17 which is a schematic partial sectional structural diagram of match of a battery cell 110 and a wall structure 120 in one or more embodiments of the present disclosure, the battery module 100 further includes a sealing member 130, and the sealing member 130 is arranged between the carrying surface m and a plurality of battery cells 110.

Thus, a sealing performance between the battery cell 110 and the carrying surface m may be improved, which further helps to form the fluid channel forcing the liquid in the flow guiding cavity D to enter the flow guiding channel p1 via the opening w2 through the inlet of the flow guiding channel p1.

It should be noted that the sealing member 130 may be a rubber sealing member 130, a urethane sealing member 130, or the like, and may have a certain buffering performance while improving the sealing performance.

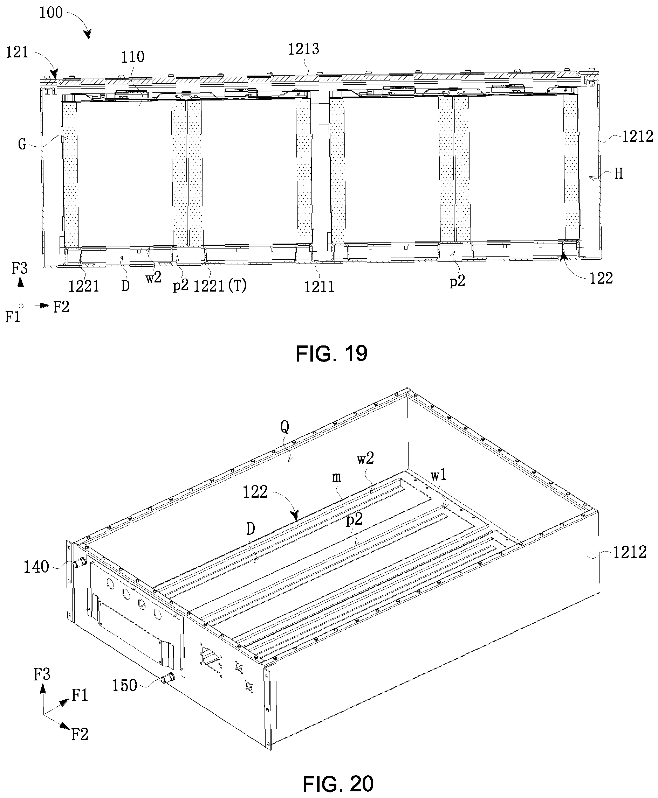

According to some embodiments of the present disclosure, referring to FIG. 18, FIG. 19, and FIG. 20 in which FIG. 18 is a schematic perspective structural diagram of a battery module 100 according to one or more embodiments of the present disclosure, FIG. 19 is a schematic sectional structural diagram of FIG. 18, and FIG. 20 is a schematic perspective structural diagram of a part of a wall structure 120 in one or more embodiments of the present disclosure, the wall structure 120 includes an accommodation cavity Q, and the flow guiding cavity D and a plurality of battery cells 110 are all arranged in the accommodation cavity Q. A buffer cavity H is further defined between the wall structure 120 and the plurality of battery cells 110, the buffer cavity H at least surrounds the plurality of battery cells 110, and the buffer cavity H is in communication with the outlet of the flow guiding channel p1. The battery module 100 further includes a liquid outlet member 140, and the interior of the liquid outlet member 140 is in communication with the buffer cavity H.

For example, taking FIG. 18 to FIG. 20 as an example, when the wall structure 120 includes the first body 121 and the second body 122, the first body 121 includes a bottom wall 1211, a side wall 1212 surrounding a periphery of the bottom wall 1211, and a top wall 1213 opposite to the bottom wall 1211. The top wall 1213 is connected to the side wall 1212. The bottom wall 1211, the side wall 1212 and the top wall 1213 jointly enclose the accommodation cavity Q. In the situation illustrated in FIG. 20, the top wall 1213 is not shown. The side wall 1212 may be configured as a frame structure, and the side wall 1212 may include two edge walls oppositely arranged in the first direction F1 and two edge walls oppositely arranged in the second direction F2. When the plurality of battery cells 110 are in matched connection to the wall structure 120, the buffer cavity H is further defined between the wall structure 120 and the plurality of battery cells 110. The buffer cavity H may be configured to buffer the liquid. When flowing out from the outlet of the flow guiding channel p1, the liquid flows into the buffer cavity H.

For example, the liquid outlet member 140 may be arranged on the side wall 1212 of the wall structure 120, and the liquid outlet channel is arranged in the liquid outlet member 140. The liquid outlet channel is in communication with the buffer cavity H. The liquid outlet member 140 may be a liquid outlet joint.

Thus, by providing the buffer cavity H, the liquid flowing out from the outlet of the flow guiding channel p1 can flow through a side surface of the battery cell 110 not participating in defining of the flow guiding channel p1 for cooling, is buffered by the buffer cavity H and then flows out, thereby cooling the battery cell 110 more completely and improving temperature uniformity of the battery module 100.

According to some embodiments of the present disclosure, with continued reference to FIG. 20, the battery module 100 further includes a liquid inlet member 150, and an outlet of the liquid inlet member 150 is in communication with the liquid inlet w1 of the flow guiding cavity D. The liquid inlet member 150 and the liquid outlet member 140 are both arranged on the wall structure 120 and located on a same side of the wall structure 120.

For example, taking FIG. 20 as an example, the liquid inlet member 150 and the liquid outlet member 140 are both arranged on one side of the wall structure 120 along the first direction F1. The liquid inlet member 150 may be a liquid inlet joint.

In this way, since the liquid inlet member 150 and the liquid outlet member 140 are located on the same side of the wall structure 120, pipeline connection between the liquid inlet member 150 and the liquid outlet member 140 is facilitated.

It should be noted that pump structures may be further arranged at the liquid inlet member 150 and the liquid outlet member 140, respectively, so as to further facilitate inflowing and outflowing of the liquid.

According to some embodiments of the present disclosure, with continued reference to FIG. 20, in the direction from the bottom side of the battery cell 110 to the top side of the battery cell 110, an outlet of the liquid outlet member 140 is located downstream of an inlet of the liquid inlet member 150.

Thus, on the one hand, the outlet of the liquid outlet member 140 is located upstream of the inlet of the liquid inlet member 150 in a gravity direction, and it is more difficult for the liquid to overcome gravity to flow out from the outlet of the liquid outlet member 140 under an action of the gravity. In this way, the liquid input through the liquid inlet member 150 can flow more fully in a flow channel formed by the flow guiding cavity D, the flow guiding channel p1 and the buffer cavity. On the other hand, since the liquid in a hotter part has a higher temperature and molecular motion is increased, a volume of the liquid in this part expands and density decreases, so that the liquid tends to flow upwards, and when the outlet of the liquid outlet member 140 is higher, an improvement of the situation that the liquid in a colder part in the buffer cavity flows out from the outlet of the liquid outlet member 140 prematurely is better facilitated, and then, the liquid in the buffer cavity can be more fully utilized to dissipate heat of the battery module 100. Furthermore, such an arrangement brings convenience to mounting of a pipeline at the liquid outlet member 140 and a pipeline at the liquid inlet member 150, and improves the condition that the pipeline at the liquid outlet member 140 and the pipeline at the liquid inlet member 150 interfere.

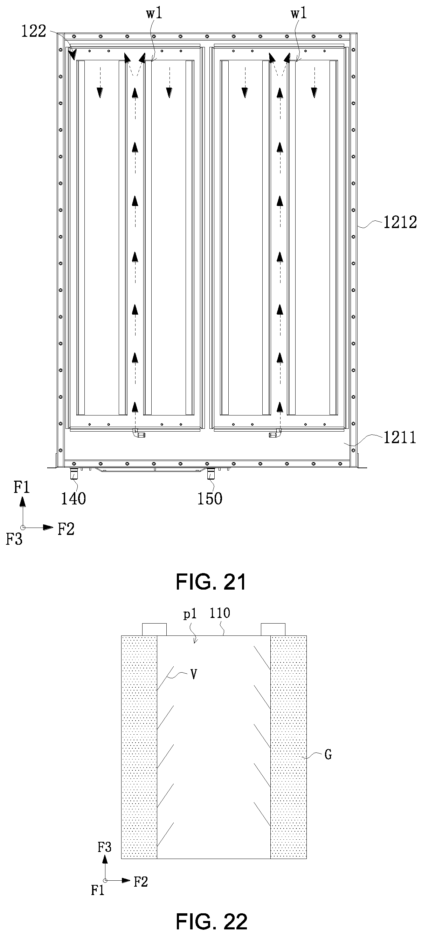

According to some embodiments of the present disclosure, with continued reference to FIG. 20 and FIG. 21, the liquid inlet w1 of the flow guiding cavity D and the liquid outlet member 140 are located on two sides of the plurality of battery cells 110 along the first direction F1, respectively.

In some embodiments, the liquid inlet w1 of the flow guiding cavity D is located on the first side s1 of the plurality of battery cells 110, and the liquid outlet member 140 is located on the second side s2 of the plurality of battery cells 110.

For example, when the liquid outlet member 140 and the liquid inlet member 150 are both arranged on a side of the wall structure 120 close to the first side s1 of a plurality of battery cells 110, the inlet of the liquid inlet channel p2 is located on the first side s1 of a plurality of battery cells 110, and the liquid inlet w1 of the flow guiding cavity D is located on the second side s2 of a plurality of battery cells 110, that is, the liquid outlet member 140, the liquid inlet member 150 and the inlet of the liquid inlet channel p2 are located on a same side. In this case, with combined reference to FIG. 10 and FIG. 21, which is a schematic top structural diagram of FIG. 20, the second body 122 in FIG. 21 can be understood with reference to the second body 122 in FIG. 12, and the liquid inlet member 150 can be in communication with the inlet of the liquid inlet channel p2 by means of a flow dividing member (not shown). It can be understood that the arrows shown in FIG. 21 illustrate a part of a flow path of the liquid. The liquid flows into the inlet of the liquid inlet channel p2 through the liquid inlet member 150, flows into the liquid inlet w1 of the flow guiding cavity D through the outlet of the liquid inlet channel p2, then flows into the flow guiding channel p1 from the opening w2 of the flow guiding cavity D, then flows into the buffer cavity from the outlet of the flow guiding channel p1, and then flows out from the outlet of the liquid outlet member 140.

In the process that the liquid flows into the flow guiding cavity D and flows out from the liquid outlet member 140, the liquid in the flow guiding cavity D has different pressures at various positions. The pressure close to the liquid inlet w1 of the flow guiding cavity D is relatively high, and the pressure is smaller as a distance from the liquid inlet w1 of the flow guiding cavity D is larger. A distance between the inlet of the flow guiding channel p1 and the corresponding inlet port w1 in the first direction F1 is denoted as a first distance. That is, when the first distance is smaller, the liquid pressure at the inlet of the flow guiding channel p1 corresponding to the first distance is larger, and the liquid in the flow guiding cavity D flows into the corresponding flow guiding channel p1 more easily. Correspondingly, the liquid in the buffer cavity has different pressures at various positions. The pressure close to the liquid outlet member 140 is relatively high, and the pressure is smaller as a distance from the liquid outlet member 140 is larger. A distance between the outlet of the flow guiding channel p1 and the liquid outlet member 140 in the first direction F1 is denoted as a second distance. That is, when the second distance is smaller, the liquid pressure at the outlet of the flow guiding channel p1 corresponding to the first distance is larger, and the liquid at the outlet of the flow guiding channel p1 flows towards the liquid outlet member 140 more easily.

Since the liquid inlet w1 of the flow guiding cavity D and the liquid outlet member 140 are located on the two sides of a plurality of battery cells 110 along the first direction F1, the second distance corresponding to the flow guiding channel p1 corresponding to a larger first distance is smaller, so that the liquid pressure at the inlet of the flow guiding channel p1 is smaller, and the liquid pressure at the outlet of the flow guiding channel p1 is larger. Correspondingly, the second distance corresponding to the flow guiding channel p1 corresponding to a smaller first distance is larger, so that the liquid pressure at the inlet of the flow guiding channel p1 is larger, and the liquid pressure at the outlet of the flow guiding channel p1 is smaller. In this way, a residence time duration of the liquid in the flow guiding channel p1 can be prolonged, and the liquid can conveniently cool the battery cells 110, thereby facilitating an improvement of the temperature uniformity of the battery module 100.

According to some embodiments of the present disclosure, with continued reference to FIG. 8, the flow guiding channel p1 extends along the third direction F3, and a sectional area of the flow guiding channel p1 is constant along the third direction F3. A section of the flow guiding channel p1 is perpendicular to the third direction F3. The sectional areas of all the flow guiding channels p1 are equal.

Thus, when the liquid inlet w1 of the flow guiding cavity D and the liquid outlet member 140 are located on two sides of a plurality of battery cells 110 along the first direction F1, the flow volume and the flow rate of the liquid in the flow guiding channel p1 can also tend to be consistent due to the consistency of the flow guiding channel p1, which is beneficial to improving the temperature uniformity of the battery module 100.

Certainly, in some other embodiments, the liquid inlet w1 of the flow guiding cavity D may also be arranged on one side or another position of the flow guiding cavity D along the second direction F2, there is no limitation herein.

According to some embodiments of the present disclosure, with continued reference to FIG. 4, FIG. 5, FIG. 7 to FIG. 10, and FIG. 19, large surfaces of two adjacent battery cells 110 in the first direction F1 face each other and define the flow guiding channel p1.

The large surface of the battery cell 110 refers to a surface having a relatively large area of the shell of the battery cell 110. With combined reference to FIG. 4 and FIG. 5, the large surfaces of the battery cells 110 refer to two opposite surfaces of the shells of the adjacent battery cells 110 in the first direction F1.

Since the area of the large surface of the battery cell 110 is larger than that of other surface, a heat dissipation area is also larger. Therefore, by defining the flow guiding channel p1 by using the large surface, the liquid in the flow guiding channel p1 can be further used for dissipating heat of the large surface of the battery cell 110, so that the heat dissipation effect on the battery cell 110 is improved.

Certainly, in some other embodiments, other side surface of the shell of the battery cell 110 rather than the large surface may be used, and an arrangement may be performed in conjunction with the arrangement of the battery cell 110, there is no limitation herein.

According to some embodiments of the present disclosure, with continued reference to FIG. 4, the battery module 100 further includes a spacer G. The spacer G is arranged between two adjacent battery cells 110 in the first direction F1 to define the flow guiding channel p1.

The spacer G may be configured as a heat insulator, and a material of the spacer G may be epoxy resin, fluorine adhesive tape, or the like, there is no limitation herein.

By defining the flow guiding channel p1 using the spacer G, manufacturing flexibility may be improved, and manufacturing of the shell of the battery cell 110 may be facilitated.

Certainly, in some other embodiments, with combined reference to FIG. 5, a protrusion U may be arranged on the shell of the battery cell 110 to form the required flow guiding channel p1, as illustrated in some aforementioned embodiments. It can be understood that the flow guiding channel p1 is illustrated in FIG. 5 only with two battery cells 110 as an example. Among a plurality of battery cells 110 arranged in the first direction F1, the protrusions U are arranged on the two sides of the battery cell 110 located in the middle in the first direction F1. In some other embodiments, the flow guiding channel p1 can be formed in conjunction with the protrusion U and the spacer G. No limitation is made herein.

According to some embodiments of the present disclosure, referring to FIG. 22 which is a schematic structural diagram of match of a battery cell 110 and the spacer G in one or more embodiments of the present disclosure, a plurality of turbulence structures V are arranged on a side wall 1212 of the spacer G in the flow guiding channel p1. A plurality of turbulence structures V are arranged at intervals in the direction from the bottom side of the battery cell 110 to the top side of the battery cell 110.

The turbulence structure V is a structure that can change a flow state of the liquid and increase a turbulence degree of the liquid in the flow path of the liquid. The turbulence structure V may be a turbulence plate, a turbulence column, or the like, and no limitation is made herein. For example, FIG. 22 is taken as an example to illustrate a case where the turbulence structure V is a turbulence plate.

Thus, by providing the turbulence structure V, a residence time duration of the liquid in the flow guiding channel p1 can be prolonged, thereby facilitating heat dissipation of the battery cell 110.

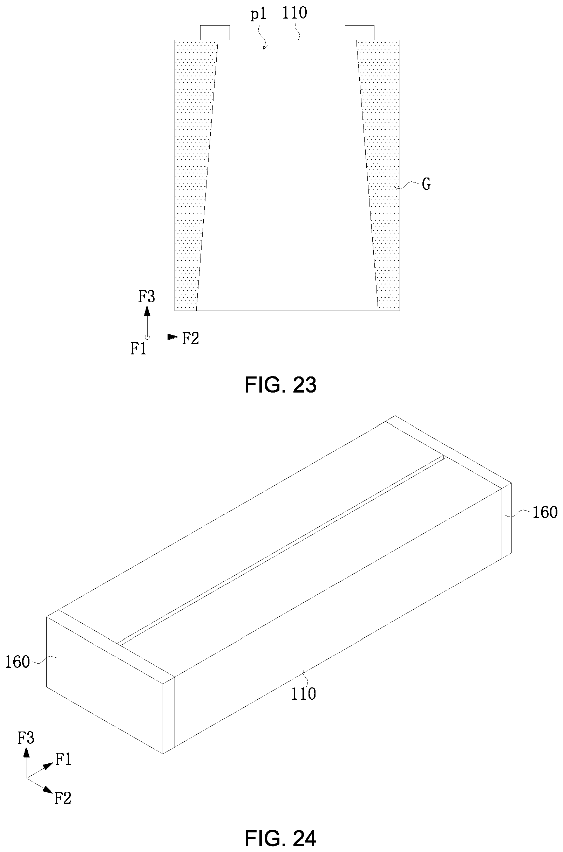

According to some embodiments of the present disclosure, referring to FIG. 23, which is a schematic structural diagram of match of a battery cell 110 and a spacer G in one or more embodiments of the present disclosure, the sectional area of the flow guiding channel p1 increases along the direction from the bottom side of the battery cell 110 to the top side of the battery cell 110. The section of the flow guiding channel p1 is perpendicular to the direction from the bottom side of the battery cell 110 to the top side of the battery cell 110.

The increasing trend may be a gradual increase or stepwise increase, there is no limitation herein. For example, FIG. 23 is taken as an example to illustrate a situation where the sectional area of the flow guiding channel p1 gradually increases along the direction from the bottom side of the battery cell 110 to the top side of the battery cell 110.

In this way, by controlling the sectional area of the flow guiding channel p1 to increase, the flow rate of the fluid in the flow guiding channel p1 can be increased. In this way, the liquid flowing into the flow guiding channel p1 is facilitated to flow out from the flow guiding channel p1.

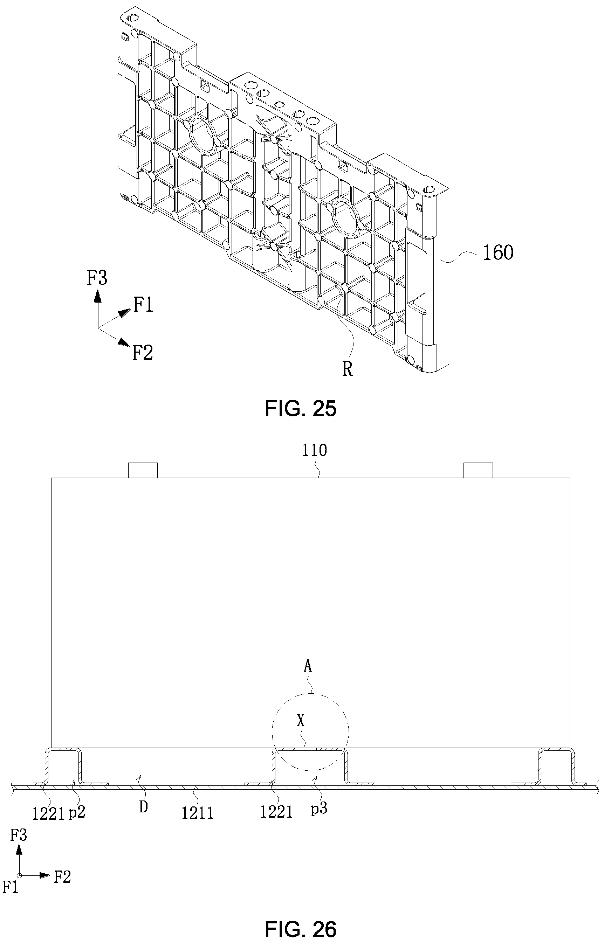

According to some embodiments of the present disclosure, referring to FIG. 24 and FIG. 25, in which FIG. 24 is a schematic perspective structural diagram of match of a battery cell 110 and an end plate 160 in one or more embodiments of the present disclosure, and FIG. 25 is a schematic perspective structural diagram of an end plate 160 in one or more embodiments of the present disclosure, the battery module 100 further includes an end plate 160. The end plates 160 are arranged on two sides of a plurality of battery cells 110 in the first direction F1, and a heat dissipation structure R is arranged on a side of at least one of the end plates 160 away from the plurality of battery cells 110.

The end plate 160 may correspond to two rows of battery cells 110, one row of battery cells 110, or another number of rows of battery cells 110, there is no limitation herein. FIG. 24 is taken as an example to illustrate a case where the end plate 160 corresponds to two rows of battery cells 110. An insulating component may be arranged between the end plate 160 and the battery cell 110 adjacent thereto, or the end plate 160 is made of an insulating material. The end plates 160 and the corresponding battery cells 110 may be fixed in group by a binding member, such as a steel band.

Since a side of the battery cell 110 adjacent to the end plate 160 facing the end plate 160 is not provided with the flow guiding channel p1, an arrangement of the heat dissipation structure R on the side of the end plate 160 away from the battery cell 110 facilitates heat dissipation of the battery cell 110 adjacent to the end plate 160, thereby further improving the temperature uniformity of the battery module 100.

According to some embodiments of the present disclosure, the heat dissipation structure R is configured as a heat dissipation fin.

Thus, the heat dissipation fin can increase a heat dissipation surface area, thereby being beneficial to improving a heat dissipation efficiency.

According to some embodiments of the present disclosure, with continued reference to FIG. 25, the heat dissipation structure R is configured as a recess arranged on a side of the end plate 160 away from the plurality of battery cells 110.

In this way, the arrangement of the recess contributes to both an increase in a heat dissipation area of the end plate 160 and a reduction in a weight of the end plate 160, thereby facilitating a weight reduction of the entire apparatus.

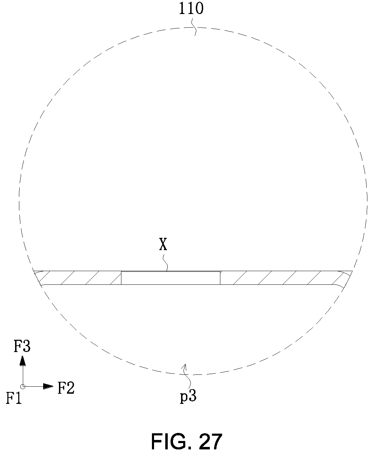

According to some embodiments of the present disclosure, referring to FIG. 26 and FIG. 27, in which FIG. 26 is a schematic structural diagram of match of a battery cell 110 and a carrying portion 1221 in one or more embodiments of the present disclosure, and FIG. 27 is a schematic partial enlarged structural diagram of A shown in FIG. 26, the second body 122 includes a plurality of carrying portions 1221 arranged at intervals along the second direction F2. A gas exhaust channel p3 is arranged in one of the carrying portions 1221, and a pressure relief mechanism X is arranged on the bottom side of the battery cell 110. An orthographic projection of the pressure relief mechanism X onto a reference plane is located within a range of an orthographic projection of an inlet of the gas exhaust channel p3 onto the reference plane. The reference plane is perpendicular to the direction from the bottom side of the battery cell 110 to the top side of the battery cell 110. The gas exhaust channel p3 is in communication with the exterior of the battery module 100. That is, the inlet of the gas exhaust channel p3 and the pressure relief mechanism X are oppositely arranged in the third direction F3.

In this way, the pressure relief mechanism X of the battery cell 110 is arranged on the bottom side of the battery cell 110, and the carrying portion 1221 is used to form the gas exhaust channel p3 adapted to the pressure relief mechanism X, so that pollution of the interior of the battery module 100 by the electrolyte brought out during pressure relief can be alleviated, which is beneficial to prolonging the service life of the battery module 100. Meanwhile, since the gas exhaust channel p3 is arranged in the carrying portion 1221, the utilization rate of the space inside the battery module 100 is further improved.

It should be noted that the third direction F3 may or may not be parallel to the gravity direction, as long as the bottom side of the battery cell 110 is located below the top side of the battery cell 110 in the gravity direction and the liquid can cool the battery cell 110, there is no limitation herein. In the embodiments of the present disclosure, a case where the third direction F3 and the gravity direction are parallel to each other is illustrated.

According to some embodiments of the present disclosure, the embodiments of the present disclosure provide an energy storage system, including the battery module 100 according to any of the above embodiments.

In some embodiments, the energy storage system further includes an energy storage converter, and the battery module 100 described above in the embodiments is electrically connected to the energy storage converter. The energy storage converter can convert energy generated by solar power generation, wind power generation, fuel cells, or the like, to be a direct current, and store the direct current in a battery. Then, the electric energy in the battery can be output as required, and the energy storage system can provide reliable energy storage for a user, and provide a standby power source for the user when power is off or the power is insufficient, thus facilitating use of the user.

The energy storage system also has the advantages of the above battery module 100, there is no limitation herein.

According to some embodiments of the present disclosure, the embodiments of the present disclosure provide an electric device, including the battery module 100 according to any of the above embodiments.

The battery module is used as a power source of the electric device, and the electric device is an apparatus for achieving corresponding functions by consuming electric energy with the electric energy as an energy source. For example, the electric device may be, but is not limited to, an electric tool, a battery car, an electric vehicle, a ship, a spacecraft, or the like.

The electric device also has the advantages of the above battery module 100, there is no limitation herein.

It should be noted that, in the battery module 100 illustrated in FIG. 1, FIG. 13 and FIG. 14, the space surrounding the battery module 100 may be formed by using related components in the energy storage system or related components in the electric device, so that a liquid flow path in the battery module 100 illustrated in FIG. 18, for example, may be formed. The battery module 100 in different embodiments or a combination of the battery modules 100 in different embodiments may be configured according to use situations, there is no limitation herein.

The technical features of above-mentioned embodiments can be combined arbitrarily. In order to make the description concise, not all possible combinations of the technical features are described in embodiments. However, as long as there is no contradiction in the combination of these technical features, the combinations should be considered as in the scope of the specification.

Above-described embodiments are only several implementations of the present disclosure, and the descriptions are relatively specific and detailed, but they should not be construed as limiting the scope of the present disclosure. It should be understood by those of ordinary skill in the art that various modifications and improvements can be made without departing from a concept of the present disclosure, and all shall fall within the protection scope of the present disclosure. Therefore, the protection scope of the present disclosure should be defined by the appended claims.

## Claims

1. A battery module, comprising:
a plurality of battery cells arranged at least along a first direction, a flow guiding channel being defined between two adjacent battery cells along the first direction, bottom sides of the two adjacent battery cells defining an inlet of the flow guiding channel, and top sides of the two adjacent battery cells defining an outlet of the flow guiding channel; and
a wall structure comprising a flow guiding cavity, at least part of the flow guiding cavity being arranged on the bottom sides of the plurality of battery cells, and the flow guiding cavity comprising a liquid inlet and an opening facing the plurality of battery cells,
wherein the plurality of battery cells are in matched connection to the wall structure, in such a manner that the inlet of the flow guiding channel is in communication with the opening, and a fluid channel which forces a liquid flowing into the flow guiding cavity to flow into the flow guiding channel through the opening is defined.

2. The battery module according to claim 1,
wherein the wall structure further comprises a liquid inlet channel, and an outlet of the liquid inlet channel is in communication with the liquid inlet; and
an inlet of the liquid inlet channel and the liquid inlet are located on two opposite sides of the plurality of battery cells.

3. The battery module according to claim 2,
wherein the plurality of battery cells comprise a first side and a second side oppositely arranged in the first direction; and
the inlet of the liquid inlet channel is located on the first side, and the liquid inlet is located on the second side.

4. The battery module according to claim 3,
wherein at least one liquid inlet channel is provided, and a plurality of flow guiding cavities are provided;
all of the plurality of flow guiding cavities are arranged along a second direction; one liquid inlet channel is arranged between two adjacent flow guiding cavities along the second direction; the liquid inlets of the two adjacent flow guiding cavities are in communication with the outlet of the liquid inlet channel arranged between the two adjacent flow guiding cavities; and
a direction from the bottom side of the battery cell to the top side of the battery cell, the first direction and the second direction intersect each other.

5. The battery module according to any one of claims 1 to 4,
wherein the plurality of battery cells are arranged in at least one row along the second direction;
each row of battery cells is arranged corresponding to at least one flow guiding cavity, and the inlet of the flow guiding channel defined by each row of battery cells is in communication with the opening of the corresponding flow guiding cavity; and
a direction from the bottom side of the battery cell to the top side of the battery cell, the first direction and the second direction intersect each other.

6. The battery module according to any one of claims 1 to 4,
wherein the opening is arranged on the bottom sides of the plurality of battery cells, and an orthographic projection of the opening onto a reference plane is located within a range of an orthographic projection of the plurality of battery cells onto the reference plane, the reference plane being a plane perpendicular to a direction from the bottom side of the battery cell to the top side of the battery cell.

7. The battery module according to claim 6,
wherein the wall structure comprises a first body and a second body connected to each other;
the first body at least comprises a bottom wall, the bottom wall and the second body are arranged along the direction from the bottom side of the battery cell to the top side of the battery cell, and the flow guiding cavity is defined by the first body and the second body; and
the second body comprises a carrying surface facing the plurality of battery cells, and the carrying surface carries the plurality of battery cells.

8. The battery module according to claim 7,
wherein the plurality of battery cells comprise a first side and a second side oppositely arranged along the first direction;
the second body comprises at least three carrying portions arranged at intervals along a second direction, and the at least three carrying portions each extend from the first side to the second side; a plurality of flow guiding cavities are defined by the at least three carrying portions and the first body; and side surfaces of the at least three carrying portions facing the plurality of battery cells form at least a part of the carrying surface; and
the direction from the bottom side of the battery cell to the top side of the battery cell, the first direction and the second direction intersect each other.

9. The battery module according to claim 8, wherein the second body further comprises a first connection portion and a second connection portion oppositely arranged along the first direction;
the at least three carrying portions each comprise a first end in the second direction connected to the first connection portion, and a second end in the second direction connected to the second connection portion, to define the plurality of flow guiding cavities; and
side surfaces of the first connection portion, the second connection portion and the at least three carrying portions facing the plurality of battery cells form the carrying surface.

10. The battery module according to claim 8,
wherein among the at least three carrying portions, each carrying portion other than a first carrying portion and a last carrying portion arranged in the second direction is a target portion;
at least one target portion is provided therein with a liquid inlet channel, an outlet of the liquid inlet channel is in communication with a liquid inlet of a flow guiding cavity corresponding to the liquid inlet channel, and the flow guiding cavity corresponding to the liquid inlet channel is the flow guiding cavity located on each of two sides of the target portion in the second direction, the target portion being provided with the liquid inlet channel.

11. The battery module according to claim 8,
wherein at least one of the at least three carrying portions is configured as a bent portion and connected to the bottom wall of the first body.

12. The battery module according to any one of claims 1 to 4,
wherein the wall structure further comprises an accommodation cavity, and the flow guiding cavity and the plurality of battery cells are arranged in the accommodation cavity;
a buffer cavity is defined between the wall structure and the plurality of battery cells, the buffer cavity at least surrounds the plurality of battery cells, and the buffer cavity is in communication with the outlet of the flow guiding channel; and
the battery module further comprises a liquid outlet member, and an interior of the liquid outlet member is in communication with the buffer cavity.

13. The battery module according to any one of claims 1 to 4,
wherein the battery module further comprises a spacer; and
the spacer is arranged between two adjacent battery cells along the first direction, to define the flow guiding channel.

14. An energy storage system, comprising the battery module according to any one of claims 1 to 13.

15. An electric device, comprising the battery module according to any one of claims 1 to 13.
